# EUROPEAN PATENT APPLICATION

(11) **EP 1 868 370 A1**
(43) Date of publication of application: **19.12.2007**
(21) Application number: 06729136.9
(22) Date of filing: 15.03.2006
(51) Int. Cl.: H04N 5/225, B60R 1/00, G06T 1/00, H04N 5/20, H04N 7/18

(54) **IMAGE PROCESSING DEVICE AND METHOD, PROGRAM AND RECORDING MEDIUM**

(30) Priority: 15.03.2005 JP 2005073756
(71) Applicant: OMRON CORPORATION, Kyoto-shi, Kyoto 600-8530 (JP)
(72) Inventor: ANDO, Tanichi, C/O OMRON CORPORATION, Kyoto-shi, Kyoto 600-8530 (JP)
(74) Representative: Brykman, Georges
(86) International application number: PCT/JP2006/305115
(87) International publication number: WO 2006/098358

(57) **Abstract**

The present invention relates to an image processing apparatus, method and program, and a recording medium configured to be able to clearly display an image captured by a high dynamic range imaging device. A reference region extractor extracts data corresponding to an image of a reference region in the image captured by image pickup unit, and calculates an average value of the luminance of the pixels of the reference region. A clip processing unit allocates the average value of the luminance of the pixels of the reference region to a specified tone in a range of tones capable of being displayed on a display unit, and clips the luminance range corresponding to the range of tones capable of being displayed on the display unit. A tone conversion unit converts image data supplied from the image pickup unit to image data corresponding to the range of tones capable of being displayed on the display unit based on the clipped luminance range, and outputs this image data.

## Description

### BACKGROUND OF THE INVENTION

### 1. Field of the Invention

The present invention relates to an image processing apparatus, method and program, and a recording medium, and more particularly to an image processing apparatus, method and program, and a recording medium capable of clearly displaying an image captured with a high dynamic range imaging device.

### 2. Description of the Related Art

In recent years, the use of an imaging device (HDRC (High Dynamic Range CMOS (Complementary Metal Oxide Semiconductor))), which has a high dynamic range enabling the imaging of clear images of either backlit scenes, such as outdoor images with a bright sky or sun in the background, or even at night, has become widespread. Since the HDRC has a high dynamic range, there is no loss of image data due to over- or under-illumination, enabling its use as an imaging sensor, and raising expectations of wide ranging applications (For example, refer to National Publication of Translated Version No. 7-506932).

Since it is possible to capture an image having a high dynamic range with an HDRC, it is also possible to display the number of tones of an image captured by an HDRC (captured image) as a maximum of 2¹⁴ tones (tonal range of 2¹⁴ levels), but a display device, such as an ordinary display, for example, is generally capable of displaying 256 tones. For this reason, when displaying an HDRC-captured image, the captured image cannot be displayed as-is on an ordinary display because it will normally be displayed at a number of tones that is less than that of the captured image. Accordingly, captured-image tone conversion is carried out for displaying an HDRC-captured image on an ordinary display device.

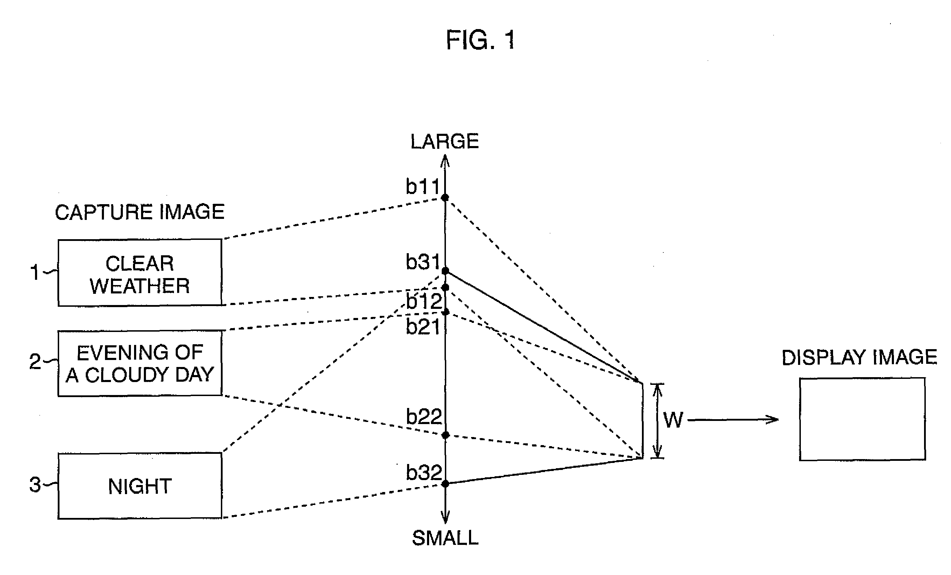

Fig. 1 is a diagram illustrating an example of conventional tone conversion. In this example, it is supposed that image 1, which is an image taken on a clear day, image 2, which is an image taken on a cloudy day, and image 3, which is an image taken at night, are captured images taken with an HDRC-equipped camera, and that these images 1, 2, 3 are converted and displayed as display images on a display device.

Further, this figure shows the fact that the maximum luminance value of the pixels comprising image 1 is value b11, and the minimum luminance value of these pixels is value b12, that the maximum luminance value of the pixels comprising image 2 is value b21, and the minimum luminance value of these pixels is value b22, and that the maximum luminance value of the pixels comprising image 3 is value b31, and the minimum luminance value of these pixels is value b32.

When the range of tones W capable of being displayed by the display device, for example, is 256 tones, tone conversion is carried out based on the maximum and minimum luminance values of the pixels comprising images 1 through 3. For example, in image 1, the luminance values between the maximum luminance value b11 and the minimum luminance value b12 are converted so as to be allocated to 256 tones, and displayed on the display device. Meanwhile, when displaying image 2, the luminance values between the maximum luminance value b21 and the minimum luminance value b22 are converted so as to be allocated to 256 tones.

Carrying out tone conversion like this makes it possible to display a captured image taken by an HDRC camera having a high dynamic range on an ordinary display device.

However, a display image displayed using conventional tone conversion is not always displayed clearly. Since the dynamic range of an image taken with an HDRC or other high dynamic range camera is extremely higher than the dynamic range of a display device, if the tones are compressed and displayed as-is, an overall light image with no contrast results, one which makes it difficult to recognize the displayed contents with the human eye. To solve for this problem, for example, there is a method, which finds the maximum and minimum luminance values, and compresses the tones such that the maximum value becomes the maximum luminance value of the display device, and the minimum value becomes the minimum luminance value of the display device.

Further, another problem is that in a situation in which a target fluctuates greatly across an extremely wide luminance range, a display device does not know which luminance region a person is looking at. For example, in the above-mentioned method, in which a display is carried out in accordance with the maximum and minimum luminance values, when a bright sky is imaged, a bright luminance region, which differs from the luminance region that a person is viewing, has the principal tones to be displayed. Even when a large dark background is imaged at night, the same problem arises in that a dark luminance region, which differs from the luminance region that a person is viewing, has the principal tones to be displayed. Since image data captured by an HDRC camera comprise brightness information with values that are so high (or so low) as to be of little interest to a person, it is impossible to display the image with the proper density and color without knowing which luminance region a person is focused on (is interested in).

For example, as with image 1 and image 3, since the ranges between the maximum luminance values and minimum luminance values differ significantly, the tones of the colors in the display images will fluctuate by expanding and contracting in accordance with changes in the luminance values of the captured images, and can make the displayed images look extremely unnatural.

Further, in image 3, the luminance values between the maximum luminance value b31 and the minimum luminance value b32 are converted so as to be allocated to 256 tones, and are displayed on the display device, but it is highly likely that most portions of image 3, which was captured at night, will be constituted from dark (low luminance value) pixels, and there is a high likelihood that pixels having values proximate to the maximum value b31, for example, will be light emitted from objects, which appear extremely bright compared to the other parts of the image, such as flashes of light and headlights.

Thus, when all the luminance values between the maximum luminance value b31 and the minimum luminance value b32 are converted so as to be allocated to 256 tones, these values become higher than the luminance values of the pixels (the majority of the pixels in the image), the central luminance values of which should, by rights, be displayed clearly, making the overall display image corresponding to image 3 dim.

Furthermore, when the captured image is a moving image, the display brightness of the entire screen of the display image will fluctuate each time in accordance with changes in the weather and illumination, resulting in an image that is hard for the user to see. For example, when sunlight suddenly enters the screen from between buildings, or when an oncoming vehicle with its headlights ON suddenly appears from around a dark curve at night, an image, which was being displayed in an easy-to-view state up until then, suddenly becomes dark and hard to see. By contrast, for example, when approaching a dark region, such as a tunnel, the image, which was being displayed in an easy-to-view state up until then, suddenly becomes light and difficult to see.

### SUMMARY OF THE INVENTION

With the foregoing in view, the present invention is constituted so as to make it possible to clearly display an image captured by a high dynamic range imaging device.

An image processing apparatus, to which the present invention is applied, comprises imaging means for capturing an image, and outputting data of the captured image; conversion means for converting a tone of the image based on data, which corresponds to an image of a preset region included in an image corresponding to the data outputted from imaging means, which is an image of an object with a prescribed reflectance; and display means for displaying an image corresponding to signals of the image for which the tone has been converted by conversion means.

In the image processing apparatus of the present invention, an image is captured, the captured image data is outputted, a tone of the image is converted based on data, which corresponds to an image of a preset region included in an image corresponding to the outputted data, which is an image of an object with a prescribed reflectance, and an image corresponding to the signals of the tone-converted image is displayed.

Therefore, a captured image can be displayed clearly regardless of the tones displayable on display means.

The imaging means can convert an electric charge, which is generated in response to captured light, to an analog electric signal having a voltage value proportional to the logarithm of the number of charges for each pixel, and can output the image data by converting the analog electric signal to digital data.

Imaging means, for example, is constituted by an HDRC camera.

Therefore, it is possible to obtain a high dynamic range image.

The imaging means can convert an electric current, which is generated in response to captured light, to an analog electric signal having a voltage value proportional to the logarithm of the size of the current for each pixel, and can output the image data by converting the analog electric signal to digital data.

The range of tones displayable on the display means can be made smaller than the range of tones of an image captured by imaging means.

The image processing apparatus of the present invention can further comprise receiving means for receiving the input of information related to the location of the region in the image.

The conversion means can comprise extraction means for extracting the data corresponding to the preset region included in the image; specification means for specifying a luminance range corresponding to a range of displayable tones in the image based on the data extracted by extraction means; and output means for converting the tones of the image to a range of tones displayable on display means based on the luminance range specified by specification means, and outputting a signal of data corresponding to the converted image.

Therefore, it is possible to display a clear image without the entire image becoming dark (or becoming light) even when an extremely light (or dark) object appears in one portion of the image.

The extraction means can calculate an average value of the luminance values of pixels in the region based on data corresponding to the region, and specification means can specify the luminance range by allocating the average value of the pixel luminance values of the region calculated by extraction means to a preset tone within the range of tones displayable on display means, and specifying upper and lower limit values of the luminance corresponding to the range of displayable tones in the image.

Therefore, the corresponding relationship between the luminance value and tone of a pixel can be properly established, and an image can be displayed with natural shades at all times.

The conversion means can further comprise storage means for storing information related to the location of the region in the image, and information related to a tone, which is within the range of tones displayable on display means, and which corresponds to an average value of the luminance values of the region's pixels.

The conversion means can be constituted to determine a tone, which is within the range of tones displayable on display means, and which corresponds to the luminance values of the pixels of the region, based on a user selection related to the display of the image of the region.

Therefore, it is possible to convert image tones based on an object always included in a captured image, and to display the image in user-preferred shades without knowing the reflectance.

The conversion means can be constituted to determine a tone, which is within the range of tones displayable on display means, and which corresponds to the luminance values of the pixels of the region, based on the reflectance of the object of the image of the region.

Therefore, it is possible to convert an image tone based on the region, which is in the captured image, and which always comprises an object with a known reflectance.

The image processing apparatus of the present invention can further comprise distance measurement means for measuring the distance to the object in the image of the region, and can be constituted so as to calculate the reflectance of the object based on the distance to the object in the image of the region measured by distance measurement means, and the luminance value of the pixels of the region.

Therefore, it is possible to accurately measure the reflectance of the region object, which is always included in a captured image.

The image processing apparatus of the present invention can be constituted so as to further comprise measurement means for emitting a laser beam on the object in the image of the region, and measuring the reflectance of the object based on the intensity of the light detected by a photodetection unit which receives the reflected light, and the distance to the object calculated based on the time it takes for the reflected light to be detected by the photodetection unit.

Therefore, it is possible to accurately and rapidly measure the reflectance of the region object always included in a captured image.

The imaging means can be constituted so as convert either an electrical charge or an electric current, which is generated in response to captured light, to an analog electric signal having a voltage value proportional to the logarithm of either the number of electrical charges or the size of the current for each pixel, can use conversion means to carry out tone conversion processing for the analog electrical signal, and can convert the analog electric signal which has been subjected to the processing of the conversion means, to digital data, and output this digital data.

Therefore, it is possible to readily carry out image processing for a captured image.

An image processing method, to which the present invention is applied, comprises an acquisition step of acquiring data of an image captured by imaging means; a conversion step of converting a tone of the image based on data corresponding to an image of a preset region included in an image corresponding to the data acquired by the processing in the acquisition step, which is an image of an object with a prescribed reflectance; and a display step of displaying an image corresponding to a signal of the image for which the tone has been converted by the processing in the conversion step.

In the image processing method of the present invention, data of an image captured by imaging means is acquired, an image tone is converted based on data corresponding to an image of a preset region included in an image corresponding to the acquired data, which is an image of an object with a prescribed reflectance, and an image corresponding to a tone-converted image signal is displayed.

A program, to which the present invention is applied, is a program for causing an image processing apparatus to carry out image processing, and causes a computer to execute an acquisition control step of controlling the acquisition of data of an image captured by imaging means; a conversion control step of controlling the conversion of a tone of the image based on data corresponding to an image of a preset region included in an image corresponding to the data acquired by the processing in the acquisition control step, which is an image of an object with a prescribed reflectance; and a display control step of controlling the display of an image corresponding to a signal of the image for which the tone has been converted by the processing in the conversion control step.

A recording medium, to which the present invention is applied, is a recording medium recorded with a program for causing an image processing apparatus to carry out image processing, and a program for causing a computer to execute an acquisition control step of controlling the acquisition of data of an image captured by imaging means; a conversion control step of controlling the conversion of a tone of the image based on data corresponding to an image of a preset region included in an image corresponding to the data acquired by the processing in the acquisition control step, which is an image of an object with a prescribed reflectance; and a display control step of controlling the display of an image corresponding to a signal of the image for which the tone has been converted by the processing in the conversion control step.

According to the present invention, it is possible to clearly display an image. More particularly, it is possible to clearly display an image captured by a high dynamic range imaging device.

### BRIEF DESCRIPTION OF THE DRAWINGS

Fig. 1 is a diagram illustrating an example of conventional tone conversion;
Fig. 2 is a block diagram showing an example of the constitution of a monitoring apparatus, to which the present invention is applied;
Fig. 3 is a diagram showing an example of a mounting location of the image pickup unit of Fig. 2;
Fig. 4 is a diagram showing an example of a mounting location of the image pickup unit of Fig. 2;
Fig. 5 is a diagram showing an example of the constitution of the image pickup unit of Fig. 2;
Fig. 6 is a diagram illustrating the sensitivity characteristics of an image pickup unit;
Fig. 7 is a block diagram showing an example of the constitution of the control unit of Fig. 2;
Fig. 8 is a flowchart explaining an example of a reflectance measurement process;
Fig. 9 is a diagram illustrating an example of the tone conversion of the present invention;
Fig. 10 is a flowchart explaining an example of a reflectance measurement process;
Fig. 11 is a diagram showing an example of the corresponding relationship between a luminance value, reflectance and a display tone;
Fig. 12 is a flowchart explaining an example of a reference information storage process;
Fig. 13 is a diagram showing an example of the specifying of a reference region;
Fig. 14 is a diagram showing an example of an image displayed by conventional technology;
Fig. 15 is a diagram showing an example of an image displayed by the technology of the present invention;
Fig. 16 is a block diagram showing an example of another constitution of the image pickup unit;
Fig. 17 is a block diagram showing an example of the constitution of a tone allocation determination unit; and
Fig. 18 is a block diagram showing an example of the constitution of a personal computer.

### DESCRIPTION OF THE PREFERRED EMBODIMENTS

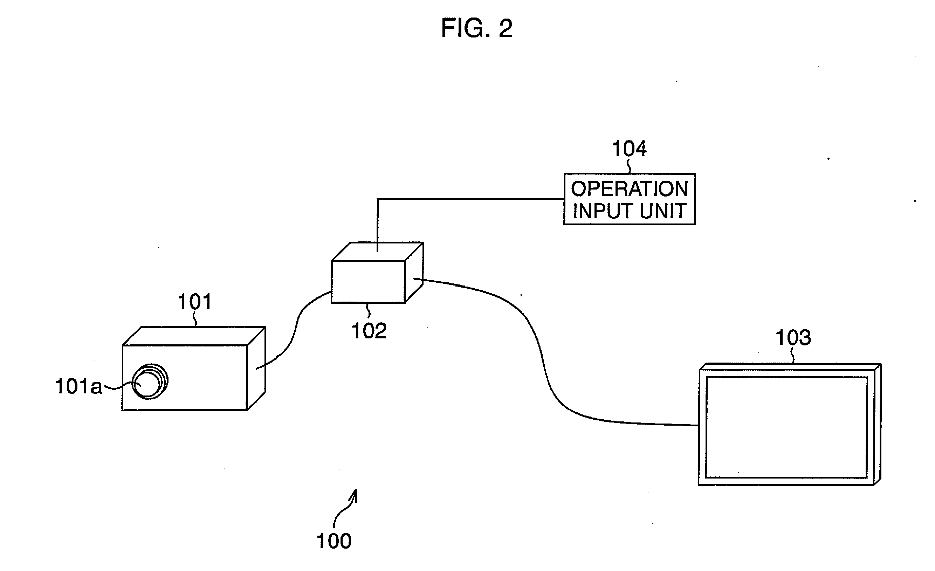

The embodiments of the present invention will be explained below by referring to the figures. Fig. 2 is a block diagram showing an example of the external constitution of an embodiment of a monitoring apparatus 100, to which the present invention is applied. The monitoring apparatus 100, for example, is an apparatus, which is mounted to an automobile or the like, images a scene exterior of the vehicle in the forward direction, and provides a clear image to a user, and is constituted by an image pickup unit 101, a control unit 102, and a display unit 103.

The image pickup unit 101, for example, is constituted by a high dynamic range camera or the like, captures an image (can be either a moving image or a still image) on the basis of light inputted from a lens 101a, and outputs the captured image data to the control unit 102. Furthermore, when the image pickup unit 101 captures a moving image, the captured image data is outputted as digital data coded in frame units.

The control unit 102 performs, on captured image data which is data supplied from the image pickup unit 101 and which is the image captured by the image pickup unit 101, processing such as tone conversion so that a clear image can be displayed on the display unit 103, and outputs a signal corresponding to the processed image data to the display unit 103.

Further, the configuration of data and the inputting of commands required for processing are carried out by an operation input unit 104. The operation input unit 104, for example, can be constituted by an external information machine, such as a personal computer.

The display unit 103, for example, is constituted by an LCD (Liquid Crystal Display), and displays an image corresponding to the signal supplied from the control unit 102. It is supposed that the display unit 103, for example, is constituted by an off-the-shelf liquid crystal display, and whereas the image pickup unit 101 captures a high dynamic range image, the display unit 103 is a display, which possesses display tones with a smaller number of tones (for example, 256 tones) relative to a captured image obtained by the image pickup unit 101.

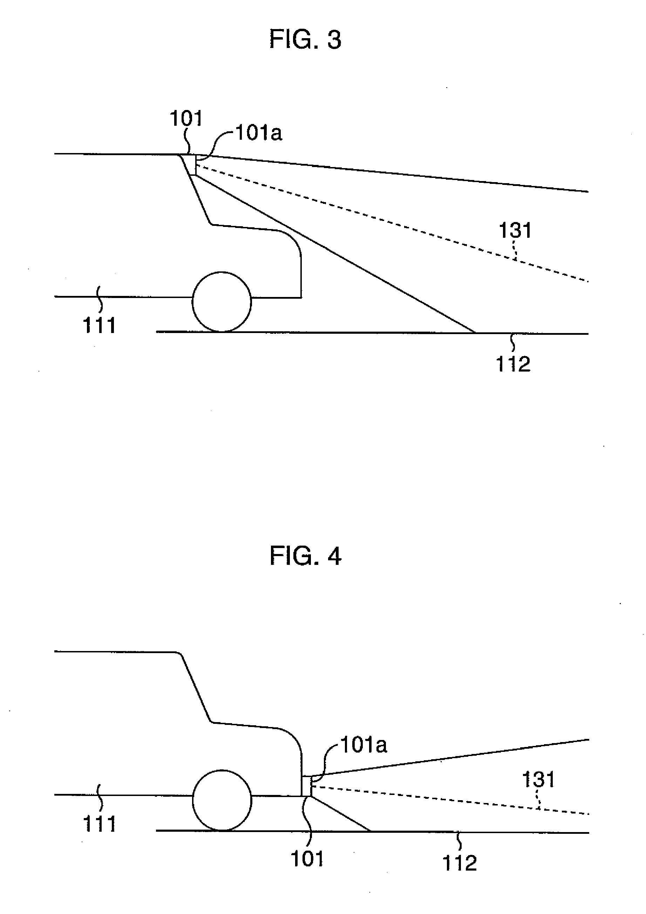

Fig. 3 is a diagram showing an example of the mounting location of the image pickup unit 101. As shown in this figure, the image pickup unit 101 is mounted proximate to the rearview mirror of an automobile 111, and a lens 101a is constituted such that a light centering around a light beam 131 comprises an immediately anterior road surface 112, which is an object required for a tone conversion process to be explained below, and which is located in front of the automobile, and captures an image corresponding to this light. Further, the image pickup unit 101 can be incorporated into the rearview mirror itself, or it can be mounted proximate to the base of the rearview mirror.

It is desirable that the mounting location of the image pickup unit 101 be a location, which enables imaging in the forward direction through an area in which dirt and the like on the windshield can be wiped clean by the windshield wipers, and should be a location, which enables imaging in the forward direction through the windshield, and which does not obstruct the field of view of the driver. By so doing, it is possible to capture practically the same image as that being seen by the user (driver).

And/or, the image pickup unit 101 can be constituted so as to be mounted as shown in Fig. 4. In this example, the image pickup unit 101 is mounted proximate to the front grill of the automobile 111. By so doing, it is possible to more accurately capture the immediately anterior road surface 112 located in front of the automobile, which is required for a tone conversion process, which will be explained hereinbelow.

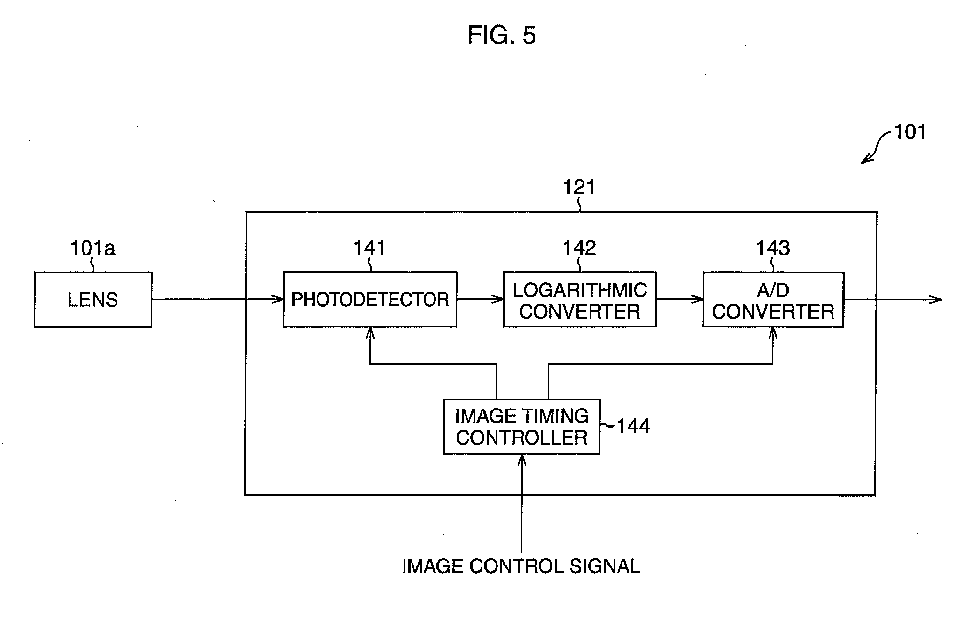

Fig. 5 is a block diagram showing an example of the constitution of image pickup unit 101. As shown in this figure, the image pickup unit 101 is constituted such that light output from the lens 101a is outputted to an imaging controller 121. The imaging controller 121, for example, is an HDRC (High Dynamic Range CMOS (Complementary Metal Oxide Semiconductor)) or other such logarithmic conversion-type imaging device, and comprises a photodetector 141, logarithmic converter 142, A/D converter 143, and an image timing controller 144.

The light of a subject, which enters through the lens 101a, forms an image on a not-shown photodetecting surface of the photodetector 141 of the imaging controller 121.

The photodetector 141, for example, comprises a plurality of light-receiving devices, such as photodiodes, and converts subject light, which is formed into an image via the lens 101a, into electrical charges in accordance with the intensity of the light (light quantity), and stores the converted charges. The photodetector 141 supplies the stored charges to the logarithmic converter 142 in synch with a control signal supplied from the image timing controller 144. Furthermore, the photodetector 141 can also be constituted such that the converted electrical charges are supplied as-is to the logarithmic converter 142 without being stored.

The logarithmic converter 142, for example, is constituted by a plurality of MOSFETs (Metal Oxide Semiconductor Field Effect Transistors). The logarithmic converter 142 makes use of the subthreshold characteristics of the MOSFET to convert an electrical charge (or current) supplied from the photodetector 141 to an analog electric signal, which has a voltage value proportional to the logarithm of the number of charges (or current strength) of each pixel. The logarithmic converter 142 supplies the converted analog electric signal to the A/D converter 143.

The A/D converter 143 converts the analog electrical signal to digital image data in synch with a control signal supplied from the image timing controller 144, and supplies the converted image data to an image processing apparatus 112. Therefore, the pixel values of the respective pixels of the image data outputted from the imaging controller 121 constitute values proportional to values arrived at by logarithmically converting subject light incident on the photodetector 141.

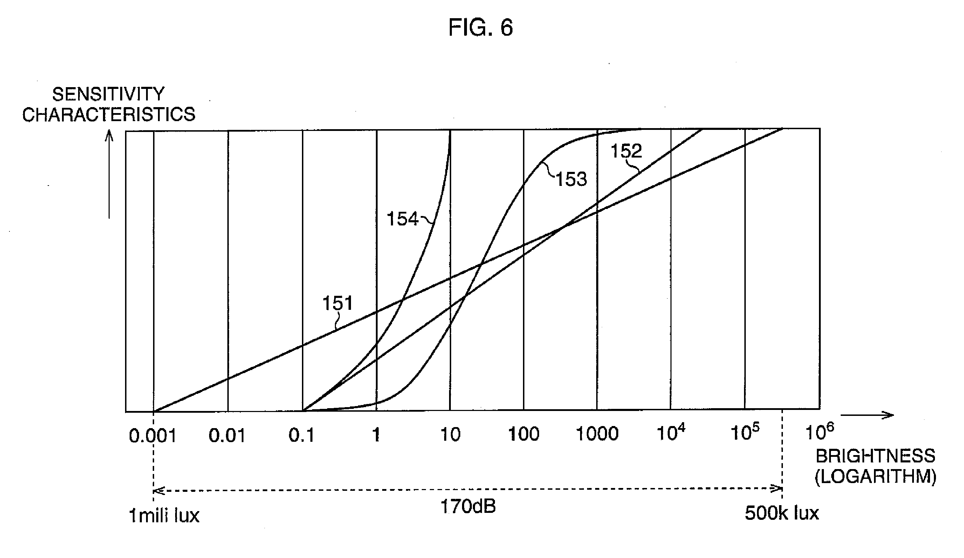

Fig. 6 is a graph showing the sensitivity characteristics of the HDRC imaging controller 121, a CCD (Charge Coupled Device) imaging device, silver halide film, and the human eye. The horizontal axis of this figure shows the logarithm of the illuminance of the incident light (measured in units of lux), and the vertical axis shows sensitivity. Line 151 shows the sensitivity characteristics of the imaging controller 121, line 152 shows the sensitivity characteristics of the human eye, line 153 shows the sensitivity characteristics of silver halide film, and line 154 shows the sensitivity characteristics of the CCD imaging device. Furthermore, the sensitivity characteristics of a conventional CMOS imaging device closely resemble the sensitivity characteristics of the CCD imaging device shown by line 154.

The imaging controller 121, by outputting image data having pixel values that are nearly proportional to the logarithm of the quantity of light of the incident subject light as described above, has a dynamic range that is higher than the dynamic ranges of the CCD imaging device, silver halide film and the human eye, extending approximately 170dB, from around 1 millilux to around 500 kilolux, which is a higher illuminance than the brightness of sunlight, without saturating the capacities of the photodiodes or MOSFETs constituting the imaging controller 121.

That is, since the logarithmic converter 142 outputs data comprising a luminance value (or pixel value), which is nearly proportional to the logarithm of the incident quantity of light as described above, even when the incident quantity of light becomes larger, the capacity of the photodiodes, MOSFETs and other such devices, which constitute the imaging controller 121, do not become saturated, and the current or applied voltage flowing to the respective devices does not exceed the range in which it is possible to perform outputting that accords with the inputs of the respective devices. Therefore, it is possible to obtain a luminance value (or pixel value), which for the most part accurately accords with the fluctuations of the incident quantity of light within an imageable luminance range. Furthermore, the dynamic range of the logarithmic converter 142 is not limited to the 170dB mentioned above, but rather logarithmic converter 142, which supports a required dynamic range, roughly 100dB or 200dB, can be utilized in accordance with the intended use.

Therefore, even if the image pickup unit 101, which uses the imaging controller 121, does not adjust the incident quantity of light by adjusting the diaphragm or shutter speed, brightness clipping, whereby a pixel value corresponding to a light portion of a subject is clipped to the maximum value of the pixel values capable of being outputted by the imaging device, and a pixel value corresponding to a dark portion of a subject is clipped to the minimum value of the pixel values capable of being outputted by the imaging device, does not occur. That is, the image pickup unit 101 can faithfully capture minute changes in the brightness of a subject without whiting out the light portions or blacking out the dark portions of the subject.

For example, even if the sun should enter into the angular field of view when imaging the scene in front of the vehicle from inside the vehicle in broad daylight, the image pickup unit 101, which uses the imaging controller 121, can capture an image, which faithfully reproduces the sun and situation in the road ahead, without adjusting the incident quantity of light. Further, even if the headlights of an oncoming vehicle shine in from the front when imaging the scene ahead of the vehicle from inside the vehicle at night, the image pickup unit 101 can capture an image, which faithfully reproduces the entire scene, from the light of the headlights of the oncoming vehicle to the portions not lit up by the headlights of its own vehicle, without adjusting the incident quantity of light.

Since the output values (luminance values) of individual pixels, for example, can be outputted as 14-bit data, the data of a captured image supplied to the control unit 102 from the image pickup unit 101 having an imaging controller 121 constituted like this becomes data corresponding to an image having a broad tonal range of 2¹⁴ if the luminance values of the pixels are converted to tones as-is.

Further, because it is not necessary for the image pickup unit 101, which uses the imaging controller 121, to carry out adjustments to the incident quantity of light, when there is a region in the image data outputted from the image pickup unit 101 in which the brightness of a subject fluctuated and a region in the image data outputted from the Image pickup unit 101 in which this brightness did not fluctuate while imaging two frames, the pixel values corresponding to the region, in which the brightness fluctuated, fluctuate, and the pixel values corresponding to the region in which the brightness did not fluctuate, do not fluctuate much at all. Therefore, the pixel values (hereinafter, may also be called difference values) of the respective pixels of data (hereinafter, called difference data), which holds the differences in image data between frames, constitute values in which a fluctuation of subject brightness is faithfully reflected for the most part.

Conversely, an imaging apparatus, which uses a CCD imaging device for which the dynamic range is narrower than that of the human eye, must adjust the incident quantity of light in accordance with the brightness of the subject, and therefore, for example, when there is a region in which the brightness of the subject fluctuates and a region in which this brightness does not fluctuate while imaging two frames, the pixel values corresponding to the region in which the brightness did not fluctuate may also fluctuate. Therefore, the difference values of the respective pixels of the difference data may not constitute values in which the fluctuation of the brightness of the subject is faithfully reflected.

Further, by virtue of the fact that the pixel values of the image data outputted from the image pickup unit 101 become values that are nearly proportional to the logarithm of the quantity of light of the subject, a histogram, which shows the distribution of pixel values of the image data, which captures this subject, regardless of the brightness (illuminance) of the illumination onto the subject, is practically the same shape as a histogram showing the distribution of the reflectance of this subject. For example, when a subject, for which the ratio of the maximum reflectance part to the minimum reflectance part is 10:1, is imaged by irradiating it with illumination, for which the illuminance differs approximately 100 fold between the first illumination and the second illumination, the widths of histograms showing the distributions of pixel values of the image data of the first illumination and image data of the second illumination constitute practically the same values (1 = log1010). Conversely, when the pixel values of image data are proportional to the quantity of light of the subject, the widths of the histograms showing the distribution of pixel values of the image data of the first illumination and the image data of the second illumination differ approximately 100 fold.

In other words, when the luminance of the subject fluctuates nearly uniformly regardless of the distribution of the luminance (reflectance) of the subject, the pixel values of the image data, which capture this subject, will fluctuate nearly uniformly. For example, when there are two regions of the subject where the ratio of luminance is 100:1, the illuminance of the light irradiated onto the subject will change nearly uniformly, and when the luminance of the subject fluctuates nearly uniformly at +5%, the fluctuation values of the pixel values corresponding to the two regions become practically the same value (10g101.05). Conversely, when the pixel values of the image data are proportional to the incident quantity of light, the difference of the fluctuation values of the pixel values corresponding to the above-mentioned two regions becomes roughly 100 fold.

By contrast, as shown by line 154 and line 153, the sensitivity characteristics of the CCD imaging device and silver halide film are not proportional to the illuminance of the incident light due to such factors as gamma characteristics. Therefore, even if the distribution of the quantity of light (illuminance) of the incident light for histograms showing the distribution of pixel values of image data captured using either a CCD imaging device or silver halide film are alike, the shapes thereof will change due to the size of the quantity of light (the intensity of the illuminance).

Unlike a CCD imaging device, since the image pickup unit 101, which is constituted using an HDRC imaging controller 121 like this, can capture an image with a high dynamic range, for example, there is no loss of image data due to either a surplus or deficit of illuminance even in a backlit scene or an image captured at night, and, for example, this image pickup unit 101 can be utilized in a wide range of fields, such as vehicle-mounted navigation systems, and security monitoring systems used in crime prevention.

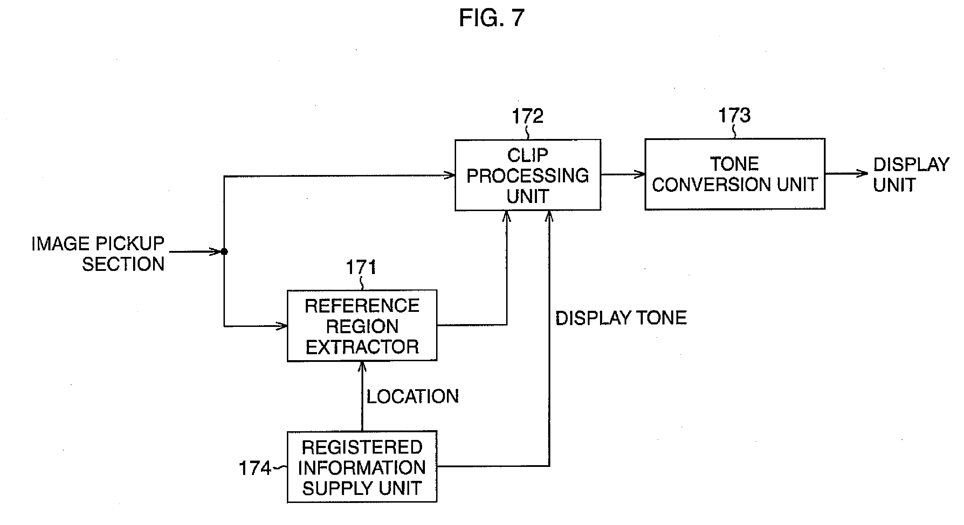

Fig. 7 is a block diagram showing an example of the constitution of the control unit 102. In this figure, a reference region extractor 171 extracts the pixels of an image corresponding to a reference region in the data of the captured image supplied from the image pickup unit 101. As used here, a reference region is a region corresponding to an image of an object, which is included in a captured image, and which has a known reflectance, and it is supposed that when the monitoring apparatus 100 is mounted in an automobile, for example, the region corresponding to the image of the immediately anterior road surface 112 in front of the automobile is the reference region. Furthermore, it is supposed that information related to the location of the reference region in a captured image is preset registered information, and is supplied to the reference region extractor 171 from a registered information supply unit 174.

The reference region extractor 171 calculates information related to the luminance values of pixels comprising the reference region (for example, the average value of luminance values), and outputs this information to a clip processing unit 172.

The clip processing unit 172 clips, from among the luminance values of pixels comprising a captured image, the luminance values (luminance range) corresponding to the pixels of a display image to be displayed on the display unit 103, based on information related to the luminance values of the pixels of the reference region supplied from the reference region extractor 171. For example, the clip processing unit 172 allocates an average value of the luminance values of the reference region pixels to a prescribed tone from among the tones capable of being displayed by the display unit 103 (for example, the nth tone). Then, the clip processing unit 172 clips the upper and lower limits of the luminance values of the pixels, which are in the captured image, and which correspond to the displayable tones of the display unit 103, and outputs same to a tone conversion unit 173.

Furthermore, it is supposed that information denoting the tone to which the average value of the luminance values of the reference region pixels will be allocated is preset registered information, and this information is supplied to the clip processing unit 172 from the registered information supply unit 174.

The tone conversion unit 173 carries out tone conversion for a captured image based on the upper and lower limits of the pixel luminance values supplied from the clip processing unit 172, and outputs a tone-converted image signal to the display unit 103. Furthermore, tone conversion, for example, can be carried out in accordance with a dithering method or an error diffusion technique, or conversion can be carried out using another method.

The registered information supply unit 174 pre-stores registered information, such as information related to the location of the reference region, and information denoting the tone to which the average luminance value of the reference region pixels is to be allocated, and supplies this information to either the reference region extractor 171 or the clip processing unit 172 as needed.

Furthermore, the respective components constituting the control unit 102 can be constituted using hardware, such as semiconductor integrated circuits incorporating arithmetic and logic units (ALU) and storage units for realizing the respective functions described hereinabove, and/or the control unit 102, for example, can be constituted from a computer or the like, and the above-described respective components can be constituted as functional blocks realized by software processed by the computer.

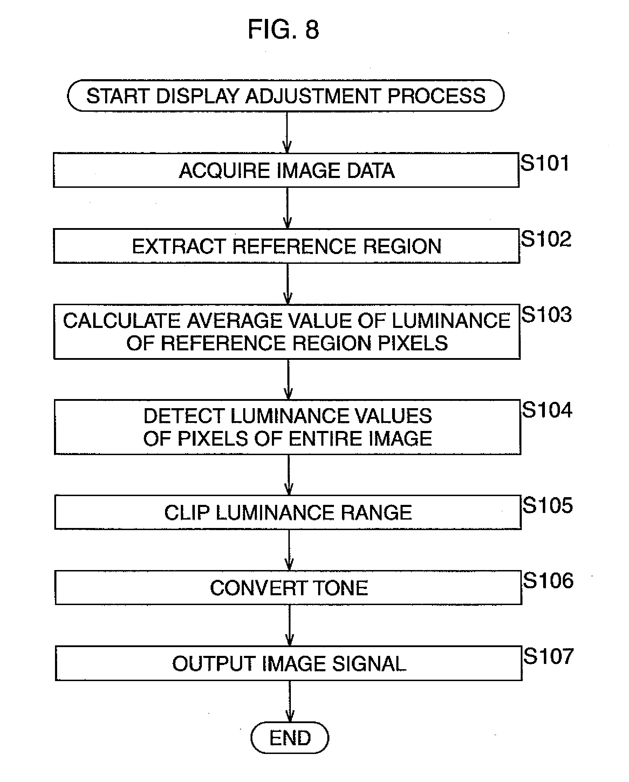

Next, a display adjustment process by the monitoring apparatus 100 will be explained by referring to the flowchart of Fig. 8.

In Step S101, the control unit 102 acquires captured image data supplied from the image pickup unit 101.

In Step S102, the reference region extractor 171 extracts image data corresponding to the reference region in an image corresponding to the data acquired via the processing of Step S101.

In Step S103, the reference region extractor 171 calculates the average value of the luminance values of the reference region pixels based on the data extracted via the processing of Step S102.

In Step S104, the clip processing unit 172 detects the luminance values of all the pixels in the captured image.

In Step S105, the clip processing unit 172 allocates the average value calculated via the processing of Step S103 to a prescribed tone from among the displayable tones (for example, the nth tone). Then, the clip processing unit 172 clips the upper and lower limits of the luminance values of the pixels corresponding to the displayable tones as the luminance range.

In Step S106, the tone conversion unit 173 converts the tones of the captured image data acquired in Step S101 based on the luminance range clipped via the processing of Step S105.

In Step S107, the tone conversion unit 173 outputs a signal corresponding to the image data tone-converted via the processing of Step S106 to the display unit 103.

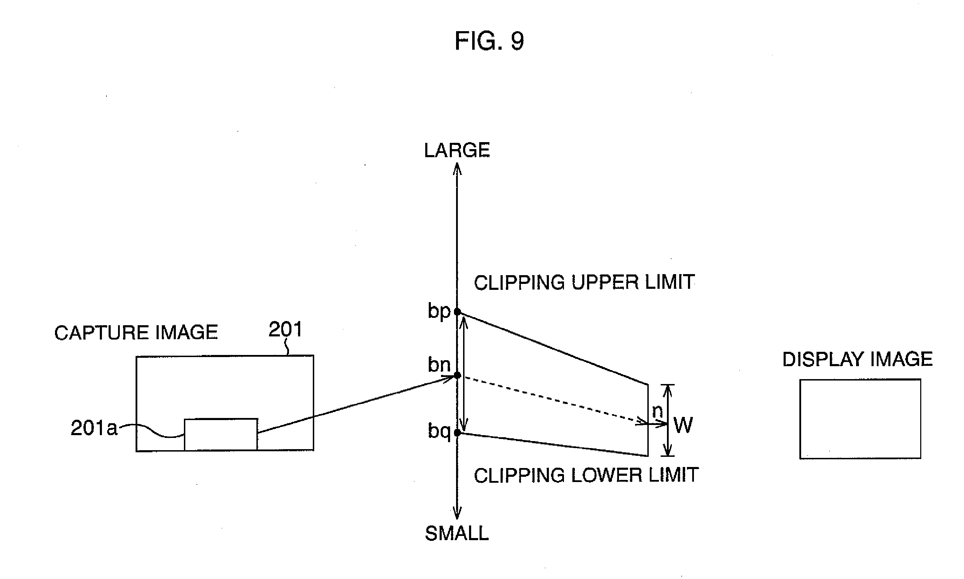

The display adjustment process will be explained in more detail by referring to Fig. 9. The captured image 201 in this figure, for example, is an image taken of a scene in front of an automobile traveling over a road, and the image 201 is acquired in Step S101.

In the image 201, it is supposed that the region 201a displayed in the bottom center of the image is the region corresponding to the image of the immediately anterior road surface 112 in front of the automobile, and is the above-mentioned reference region. In this example, the reference region 201a is shown as a rectangular region, but the shape of the reference region 201a can be an arbitrary shape. Further, when the monitoring apparatus 100 is mounted to the automobile, for example, the location of the reference region 201a can move left or right in the image 201 in accordance with the steering angle.

Since the road surface 112 is normally made of asphalt or the like, for example, it is an object that should be displayed as a gray color of a prescribed lightness. That is, the road surface 112 is an object, which is included in a captured image, and which has a known reflectance (or display color), and since it is an object, which is always included in an image captured by the image pickup unit 101 of a traveling automobile, the region 201a corresponding to the road surface 112 in the captured image is treated as the reference region. Furthermore, an image captured by the image pickup unit 101 is analyzed in advance, and information for specifying the location of the region 201a in the image 201 is pre-stored in the registered information supply unit 174. In Step S102, the data of the reference region 201a is extracted by the reference region extractor 171.

And/or, a target object, such as one portion of a body, the color of which is known, can be made to show up at all times in a captured image, and the same processing can be carried out to make the image of this target object the reference region image.

Then, the average value bn of the luminance values of the pixels comprising the reference region 201a is calculated in Step S103.

If, for example, a light colored road surface display and road surface paint, such as a white line, are included in the reference region 201a at this point, the danger is that the average luminance of the pixels of the reference region 201a will differ from the luminance of the original road surface 112. For this reason, for example, the block of pixels with the highest luminance and the block of pixels with the lowest luminance can be specified in advance from among the block of pixels comprising the reference region 201a, and the average luminance of the reference region 201a by excluding the pixels of these blocks. Or, the reference region extractor 171 can be provided with a shape recognition function, the part corresponding to road paint and the like can be specified based on the shape of the road surface 112 recognized by the shape recognition function, and the average luminance of the pixels of the reference region 201a can be calculated by excluding the pixels of the part corresponding to the road surface paint.

And/or, the member corresponding to the road surface paint can be specified by carrying out prescribed image processing. For example, carrying out image processing, which detects the edge of an object included in an image by analyzing changes in the luminance values of the pixels inside the reference region 201a, and comparing a differential value of a specified place in the characteristics, which express a change in luminance value, against a threshold can be done so that road surface paint, as well as an object on the road surface (for example, fallen leaves, or rubbish) can be detected, and the pixels of the part corresponding to the detected road surface paint or object can be removed.

Further, since the color (or reflectance) of an ordinary road surface 112 is known, for example, the grey color of a prescribed lightness of a road surface 112 is pre-stored in the registered information supply unit 174 so as to correspond to the nth tone in the displayable tonal range W of the display unit 103 (for example, the range of tones from the 0^{th} to the 255^{th}), and, after allocating the average value bn of the luminance values of the pixels comprising the reference region 201a to the nth tone, the clip processing unit 172 clips (specifies) the upper limit bp and lower limit bq of the luminance values corresponding to the tonal range W. This kind of processing is carried out in the above-mentioned Steps S104 and S105.

Furthermore, since the color of a wet road surface is darker than a dry road surface, the color of a wet road surface can be made to correspond to a tone, which is different from the dry road surface color (ordinary road surface color). For example, when the fact that it is raining is detected by the operation of the windshield wipers or the like, the setting value of the tone corresponding to the road surface color (or reflectance) in the registered information supply unit 174 can change to the setting value of a rainy day.

And/or, for example, the constitution can be such that when the difference between the maximum value and minimum value of the luminance of the pixels in a captured image is smaller than a preset value, the highest luminance block and the lowest luminance block in the captured image are detected, the average value of the luminance of the pixels of the highest luminance block and the average value of the luminance of the pixels of the lowest luminance block are respectively made the upper limit and lower limit of the luminance values, and the luminance range is subjected to clipping.

The tone conversion unit 173 carries out processing for converting the tones of the image 201 based on the upper limit bp and lower limit bq of the luminance values (Step S106).

The data of the captured image supplied from the image pickup unit 101, for example, is data corresponding to an image 201 having a broad range of tones numbering 2¹⁴ tones, and there is the likelihood that a pixel with a luminance value larger than the value bp, or a pixel with a luminance value smaller than the value bq, is included in the image 201. However, by carrying out tone conversion, the pixel with a luminance value larger than the value bp will be displayed with the same tone as the pixels with a luminance value of value bp, and the pixel with a luminance value smaller than the value bq will be displayed with the same tone as the pixels with a luminance value of value bq.

Consequently, it is possible to clearly display a captured image captured by the image pickup unit 101 on the display unit 103, which has a smaller tonal range (for example, 256 tones) relative to the captured image obtained by the image pickup unit 101.

By so doing, the image captured by the image pickup unit 101 us displayed on the display unit 103. Since the luminance range corresponding to the displayable tonal range was clipped, it is not always necessary to faithfully display all of the luminance values of the pixels of a captured image with a high dynamic range, and as a result, the blackening out (or whitening out) of the entire tone-converted image is deterred, making it possible to display a clear image even when there is an extremely light (or dark) object in one part of the image. Further, since the corresponding relationship between pixel luminance values and tones is determined based on the reflectance (color) of the road surface 112 of the reference region 201a, which is a known object, an image can always be displayed with natural colors.

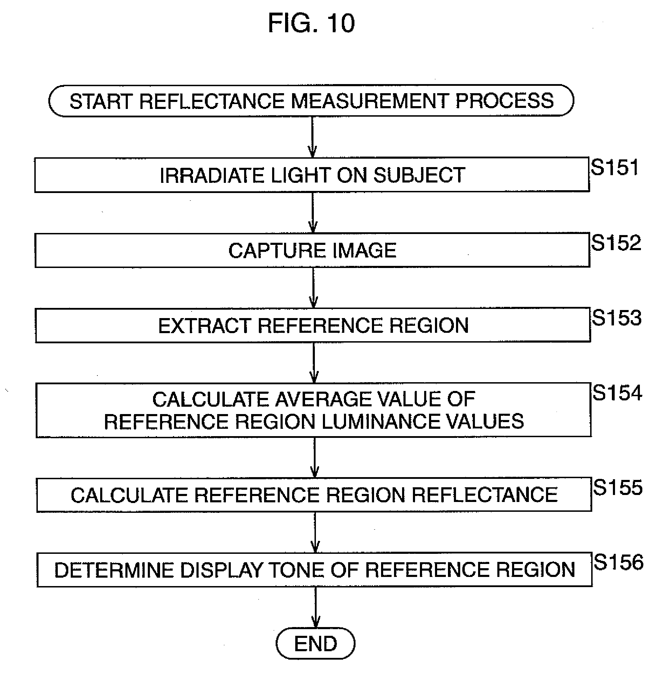

Next, a reflectance measurement process for measuring the reflectance of the reference region object will be explained by referring to the flowchart of Fig. 10. This process is executed, for example, when the user operates the operation input unit 104 and orders the execution of a reflectance measurement process. Information related to the location of the reference region in a captured image (for example, in the bottom center of the image) is pre-stored at this point.

In Step S151, a light is irradiated onto the subject (the reference region object) from not-shown illumination means, which is connected to and controlled by the control unit 102. Headlights or the like of a known brightness (illuminance), for example, are irradiated onto the immediately anterior road surface 112 at this time. The processing of Step S151, for example, can be carried out based on an operational input by the user, or it can be carried out automatically in line with the execution of the reflectance measurement process.

In Step S152, the image pickup unit 101 captures an image of the subject, which was illuminated by the processing of Step S151, and outputs this captured image to the control unit 102.

In Step S153, the reference region extractor 171 extracts the data of the reference region in the captured image.

In Step S154, the reference region extractor 171 calculates the average value of the luminance of the reference region pixels, and outputs this average value to the registered information supply unit 174. For example, the reflectance of the road surface 112 can be determined by checking the output level at which the road surface 112, which was lit by headlights of a known brightness, was detected (captured) in the high dynamic range captured image.

In Step S155, the registered information supply unit 174 calculates the reflectance of the reference region, and in Step S156, the registered information supply unit 174 determines the display tone of the reference region.

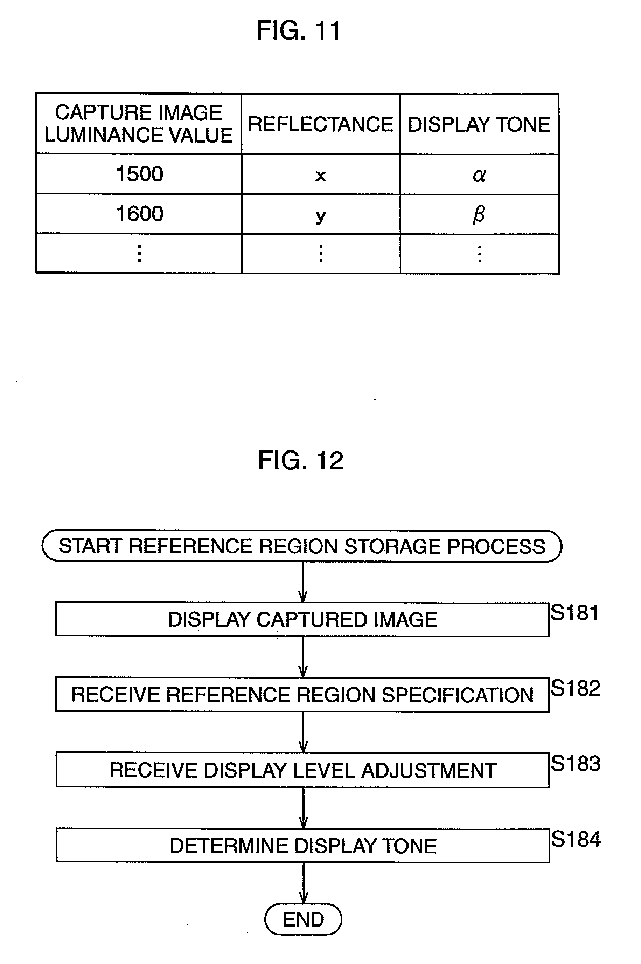

For example, a table such as that shown in Fig. 11 is stored in the registered information supply unit 174. In this example, the luminance value (of the pixels) of the captured image, reflectance and display tone are correspondently stored. Here, display tone denotes a prescribed tone in the range of tones displayable on the display unit 103. The registered information supply unit 174 specifies the reflectance and display tone of the reference region based on this table, and stores same as information denoting the tone to which the average value of the luminance values of the reference region pixels will be allocated.

Furthermore, the processing of Step S151 can be omitted, and the subject can be imaged using natural light. However, in an image captured using natural light, objects of the same reflectance will not necessarily by imaged as pixels of the same luminance value, and since the distance between the headlights and the road surface immediately anterior of the vehicle does not fluctuate greatly, reflectance can be measured more accurately by illuminating the road surface using headlights.

Further, since the output level of pixels in a captured image will differ in accordance with differences in the brightness (illuminance) of the headlights even for objects with the same reflectance, for example, a plurality of tables like that shown in Fig. 11 can be stored corresponding to a plurality of illuminances.

Furthermore, in this example, the output level at which the road surface 112 was detected (captured) in the captured image is checked, and the reflectance of the road surface 112 is determined, but, for example, the distance between the lens 101a of the image pickup unit 101 and the road surface 112 can differ in accordance with the location in which the image pickup unit 101 is mounted and the shape of the automobile, and the output level of the captured image can differ (an error can occur) even for objects having the same reflectance. Thus, for example, the reflectance of the road surface 112 can be determined more accurately by providing a laser radar in the vicinity of the lens 101a.

A laser radar emits a laser beam on a target, receives the intensity of the reflected light via a light-receiving unit such as a photodiode, detects whether or not the laser beam was reflected based on a preset threshold, and determines the distance to the target using the time it took for the reflection to be detected. Therefore, since using a laser radar makes it possible to simultaneously measure the amount of reflection of the light within the narrow range irradiated by the laser, and the distance to the region, it is possible to accurately determine reflectance using the reflectedly imaged luminance and distance.

Furthermore, the distance measurement can be carried out using a different distance measurement means, such as a stereocamera.

And/or, when the monitoring apparatus 100 is utilized in building monitoring or the like, the constitution can be such that when the reference region object is the adjacent building, and the distance to the object (target) is known in advance, for example, the distance to the reference region object can be set using the operation input unit 104.

Reflectance measurement and display tone specification are carried out in this way.

Up to this point, an example in which the monitoring apparatus 100 is mounted in an automobile or the like has been explained, but the monitoring apparatus 100, for example, can be installed proximate to a prescribed building, and the entrance to the building can be monitored. In a situation such as this, the reference region must be set anew and stored in the monitoring apparatus 100.

A reference region storage process will be explained in detail by referring to the flowchart of Fig. 12. This process is executed, for example, when the user operates the operation input unit 104, and orders the execution of the reference region storage process.

In Step S181, the control unit 102 displays an image captured by the image pickup unit 101 on the display unit 103. At this time, for example, the process explained hereinabove by referring to Fig. 8 is not carried out, and instead, pixels with luminance values between the maximum and minimum luminance values of the pixels of the captured image are displayed by being converted so as to be allocated to the tones capable of being displayed by the display unit 103 (for example, 256 tones).

In Step S182, the control unit 102 receives a specification for the reference region in the captured image based on the operational input from the operation input unit 104.

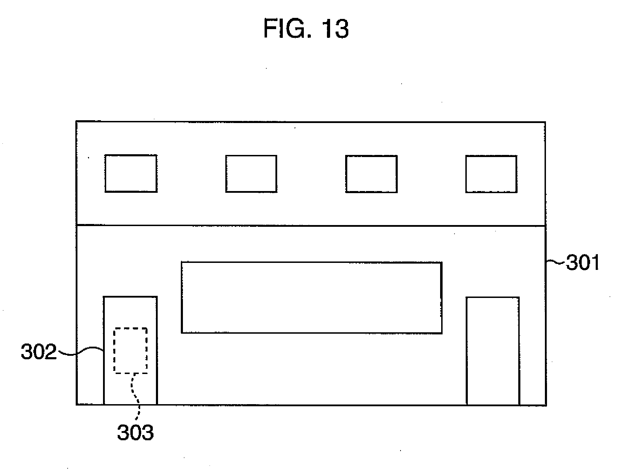

For example, when the image pickup unit 101 captures an image of a building 301 like the one shown in Fig. 13, for example, the user specifies the reference region while viewing the image displayed on the display unit 103. In this example, a rectangular (the shape is arbitrary) reference region 303 is specified in the image of the door 302 of the building 301.

Further, for example, the coordinates of the specified reference region are stored in the registered information supply unit 174 at this time as registered information, which is information related to the location of the reference region in the captured image.

In Step S183, the control unit 102 receives a display level adjustment based on an operational input from the operation input unit 104. Display level here is the level for adjusting the shading of an image displayed on the display unit 103, and an arbitrary display level is selected via a user operation. The shading (or density) of the reference region image specified in Step S182 is changed and displayed based on the display level selected by the user.

In Step S184, the control unit 102 allocates a reference region display tone based on the display level adjusted (selected) in Step S183. For example, the control unit 102 detects the tone (the nth tone) currently being used to display the reference region via the processing of Step S183, and allocates the average value of the luminance values of the reference region pixels to this tone. Consequently, registered information, which is information denoting the tone to which the average value of the luminance values of the reference region pixels is allocated is generated, and stored in the registered information supply unit 174.

The reference region storage process is carried out in this way. Consequently, since the density or color for displaying the reference region is determined (Step S183), if the reference region is displayed so as to become this density or color, it is possible to provide the user with an easy-to-view image at all times, even when the luminance of the pixels of the region outside the reference region fluctuates greatly. That is, by executing the process described hereinabove by referring to Fig. 8 based on the registered information stored in the registered information supply unit 174 via this process, it is possible to clearly display a captured image obtained by the image pickup unit 101 on the display unit 103, which has a smaller tonal range (for example 256 tones) relative to the captured image obtained by the image pickup unit 101.

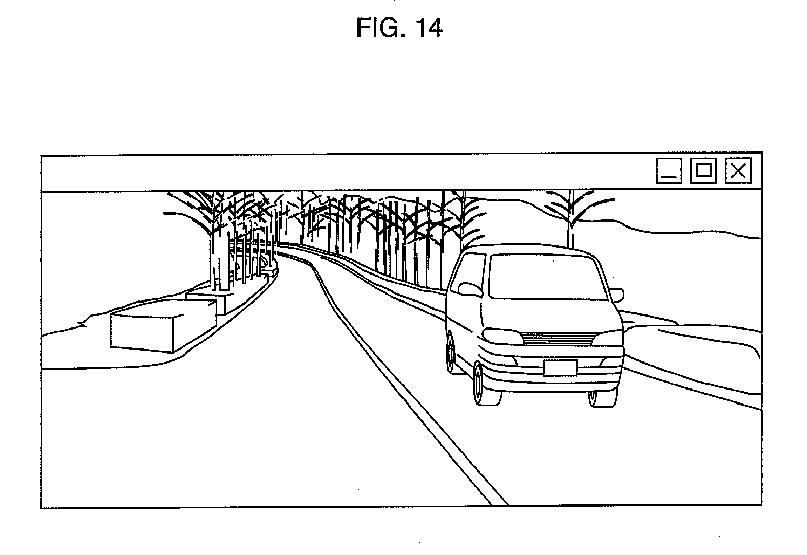

Fig. 14 is a diagram showing an example of an image, which was converted such that the pixels of luminance values between the maximum and the minimum luminance values of the pixels of a high dynamic range captured image obtained by an image pickup unit, which uses an HDRC, are allocated to a tone capable of being displayed by a display unit, and displayed on a display unit, which has display tones that are fewer in number than the captured image, as with conventional tone conversion. In this figure, an oncoming vehicle and trees along the sides of the road, for example, are not displayed clearly in the image, and the coloring of the entire image is pale, leaving the viewer with an unnatural impression.

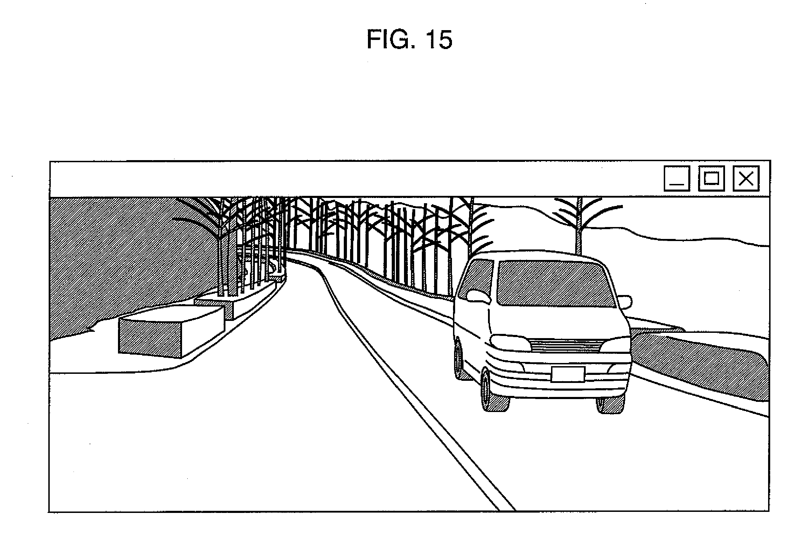

Fig. 15 is a diagram showing an example of an image, in which a high dynamic range captured image obtained by an image pickup unit, which utilizes the same HDRC as in the case of Fig. 14, is displayed on a display unit having a smaller tonal range that the captured image, in accordance with the tone conversion of the present invention (for example, process described hereinabove by referring to Fig. 8). In this figure, unlike the case on Fig. 14, for example, the oncoming vehicle and tress along the sides of the road are displayed clearly in the image, and the viewer is left with a natural impression with regard to the shading of the entire image.

The embodiment explained above describes a method for improving the display of an intermediate region, which constitutes a reference density (or color) for when a person recognizes the entire target scene. Since an HDRC image comprises either a high luminance region or a low luminance region, which differs greatly from the intermediate region, it is also possible to carry out image processing, and implement measures for enhancing image quality using a method other than the above-described embodiment, but in that case as well, using the present invention achieves the effect by which the display of the reference region is stable, and is displayed with the density, and luminance or colors that the user expects.

However, because a high dynamic range image subjected to 14-bit A/D conversion comprises an extremely broad luminance band, image processing for detecting a prescribed object included in an image, and image processing for synthesizing an object as needed cannot be carried out in the same way as conventional image processing. For example, problems arise when Laplacian conversion, which carries out differential processing, is performed for a high dynamic range image the same way that it is for an ordinary dynamic range image, such as obtaining only noise results, and experiencing an explosive increase in the amount of processing required due to there being too many luminance candidates capable of becoming thresholds for binarization. Similarly, since the properties of a high dynamic range image differ from those of an image utilized in conventional image processing for numerous other image processing methods as well, the use of a high dynamic range image requires substantial revisions to the processing process, even when it is used for the same purpose as the image utilized in conventional image processing. Thus, when using image data outputted from the image pickup unit 101 to carry out various types of image processing, outputting the image data outputted from the image pickup unit 101 as normal dynamic range image data is advantageous from the standpoint of holding down apparatus costs.

Further, in the processing described above, an example, in which a clip processing unit 172 clips the maximum and minimum values of the luminance of an A/D-converted high dynamic range image, was explained, but in this case, an A/D conversion device having a sufficiently large number of tone allocation bits must be used for A/D conversion, otherwise the converted image will look unnatural and come across as odd.

For example, when A/D conversion is carried out uniformly for a prescribed luminance range using a 12-bit A/D converter, image data of 4,096 tones is obtained. In a CCD imaging device or CMOS imaging device, the luminance range capable of being imaged is extremely narrow compared to that of the logarithmic conversion-type imaging device used in the present invention, and since tones outside the imageable luminance range are not achieved at all, even rendering this luminance range using 4,096 tones makes it possible to achieve an image which looks completely normal to the human eye. However, since the logarithmic conversion-type imaging device used in the present invention can image a luminance range extending from the darkness of night to direct sunlight, rendering such a broad luminance range with 4,096 tones results in an unnatural, odd-looking image.

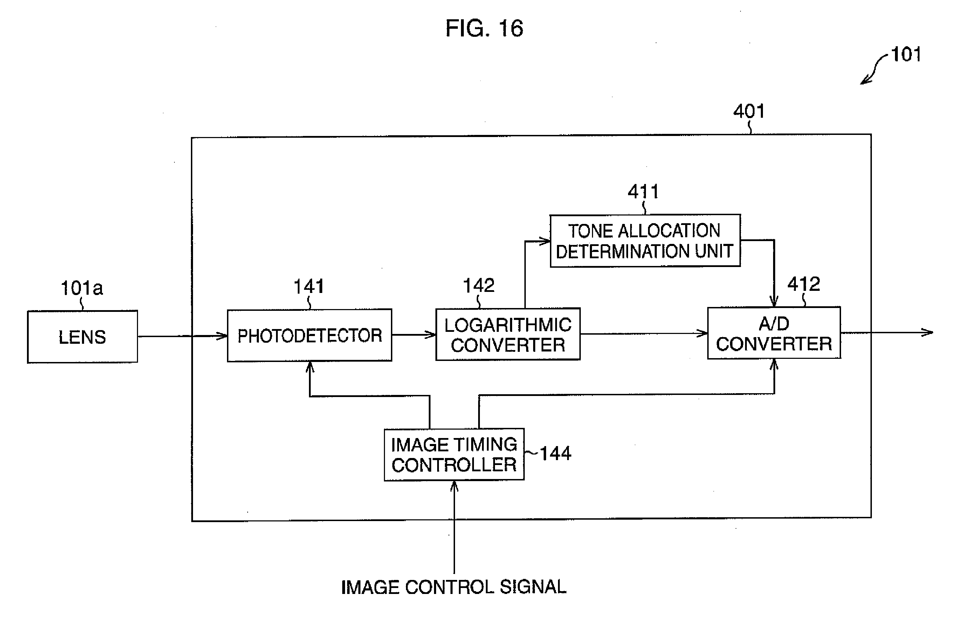

Either to make image processing based on image data supplied from the image pickup unit 101 the same as ordinary image processing, or to achieve a natural image without using a special A/D conversion device, the constitution of the image pickup unit 101 shown in Fig. 5, for example, can be constituted as shown in Fig. 16.

Fig. 16 is a block diagram showing an example of another constitution of the image pickup unit 101. In this figure, the same components as in Fig. 5 are assigned the same reference numerals, and detailed explanations of these components will be omitted. That is, other than imaging controller 401 being provided in place of imaging controller 121, a tone allocation determination unit 411 being provided anew in imaging controller 401, and A/D converter 412 being provided in place of A/D converter 143, the image pickup unit 101 of Fig. 16 has basically the same constitution as that of Fig. 5.

In this figure, the photodetector 141 converts the light of a subject formed by the lens 101a to an electrical charge in accordance with the brightness (illuminance) of the incident light, and stores the converted charge. The photodetector 141 supplies the stored charge to the logarithmic converter 142 in synch with a control signal supplied from the image timing controller 144. Furthermore, the photodetector 141 can also be constituted such that the converted electrical charge is supplied as-is to the logarithmic converter 142 without being stored. The logarithmic converter 142 generates an analog electrical signal obtained by converting an electrical charge supplied from the photodetector 141 to a voltage value, which is nearly proportional to the logarithm of the number of charges (or current strength) of each pixel. The logarithmic converter 142 supplies the generated analog electric signal to both the A/D converter 412, and the tone allocation determination unit 411.

The tone allocation determination unit 411 analyzes the analog electrical signal supplied from the logarithmic converter 112, and determines the A/D conversion tone allocation to be executed in the A/D converter 412.

More specifically, the tone allocation determination unit 411 detects the main luminance range (luminance region) in the luminance distribution of an input image, and allocates a number of A/D conversion toning steps such that the image of this luminance range is sufficiently recognizable. There can be one luminance range setting, or there can be a plurality of luminance range settings. Further, the constitution can be such that a region or regions among a plurality of regions do not have any toning steps applied, or obtain rougher toning than a prescribed luminance region. In addition, a luminance range to be set can either be automatically selected and set from a captured image, or it can be set via a user operational input.

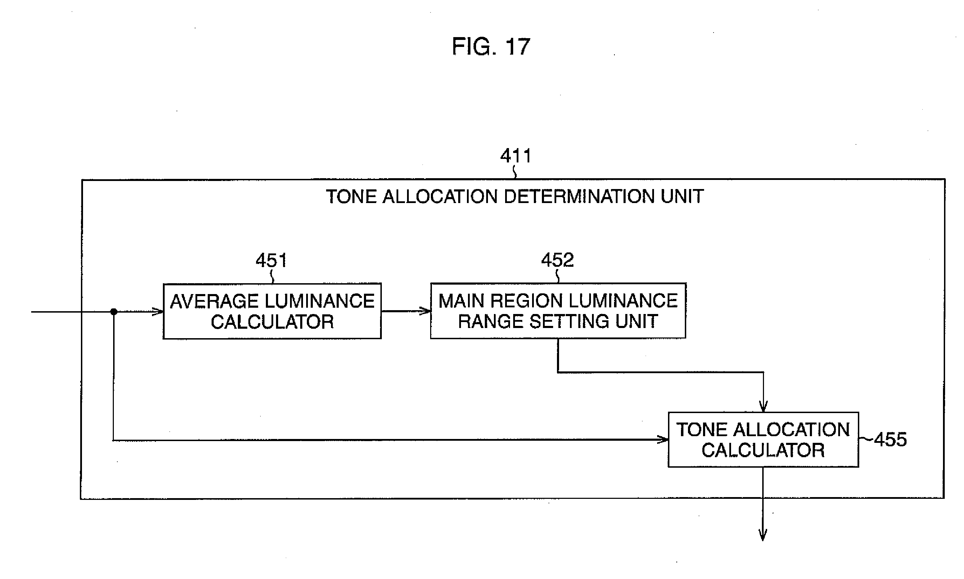

Fig. 17 is a block diagram showing an example of the constitution of the tone allocation determination unit 411 of Fig. 16.

An average luminance calculator 451 acquires an analog image signal supplied from the logarithmic converter 142, calculates the average luminance thereof, and supplies the results of the average luminance calculation to the main region luminance range setting unit 452.

The main region luminance range setting unit 452 sets the luminance range of the main region based on the average luminance of the image signal supplied from the average luminance calculator 451, and supplies the set main region luminance range to a tone allocation calculator 455.

The main region luminance range setting unit 452, for example, sets as the main region luminance range a prescribed luminance range centering on the average luminance of pixels of a preset part in an image corresponding to a signal supplied from the logarithmic converter 142. And/or, the main region luminance range setting unit 452 can also focus on the average luminance pixels in an entire image corresponding to signals supplied from the logarithmic converter 142, and set the main region luminance range by selecting a prescribed number of pixels in order from pixels having a luminance value proximate to this luminance.

The tone allocation calculator 455 acquires an image signal supplied from the logarithmic converter 142, and determines the number of toning steps to be allocated to which luminance range in A/D conversion by the A/D converter 412, based on information on the main region luminance range supplied from the main region luminance range setting unit 452.

For example, the tone allocation calculator 455 determines tone allocation so that a large number of toning steps is allocated in accordance with the luminance range set as the main region, and allocates a number of toning steps such that the output level of a pixel with a luminance input level that is lower than main region luminance range becomes 0 (that is, completely black), and a pixel with a higher luminance than the main region luminance range becomes the maximum value of the overall tone regardless of the input level.

Consequently, the limited number of toning steps of the A/D converter 412 are effectively apportioned, making it possible to achieve an image having a (natural) number of tones so that the part of the luminance range corresponding to the main region can be more easily recognized by the user even if the captured image has a high dynamic range.

The A/D converter 412 of Fig. 16 converts an analog electrical signal to digital image data in synch with a control signal supplied from the image timing controller 144. The A/D converter 412 at this time executes A/D conversion in accordance with the tone allocation determined by the tone allocation determination unit 411. The A/D converter 412 outputs the converted digital image data.

Constituting the image pickup unit 101 as shown in Fig. 16 makes it possible for the image pickup unit 101 to output A/D-converted digital image data based on tone allocation determination unit 411-allocation tones, which are not proportional to the logarithm of the brightness (incident light quantity) of the subject light.

Consequently, it is possible to output an analog signal corresponding to a captured high dynamic range image as digital data corresponding to a normal dynamic range image by using an A/D converter 412 having a limited number of toning steps.

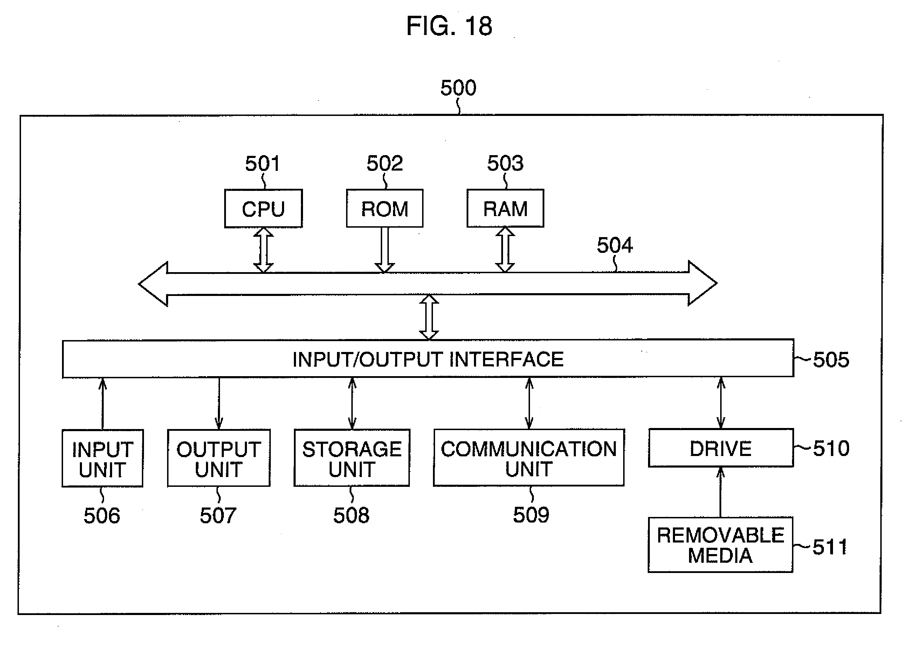

Furthermore, the above-described series of processes can be realized via hardware or software. When the above-described series of processes are executed using software, the programs constituting this software are installed over a network or from a recording medium either in a computer, which is embedded in dedicated hardware, or, for example, in a general-purpose personal computer 500 like that shown in Fig. 18, which is capable of executing a variety of functions by installing various programs.

In Fig. 18, the CPU (Central Processing Unit) 501 executes a variety of processes in accordance with either programs stored in ROM (Read Only Memory) 502, or programs loaded into RAM (Random Access Memory) 503 from a storage unit 508. The data and so forth, which the CPU 501 needs to execute the various processes, is also arbitrarily stored in RAM 503.

The CPU 501, ROM 502 and RAM 503 are interconnected via a bus 504. This bus 504 is also connected to an input/output interface 505.

An input unit 506 comprising a keyboard, mouse or the like, an output unit 507 comprising a display, which is made up of a CRT (Cathode Ray Tube), LCD (Liquid Crystal Display) or the like, as well as a speaker or the like, a storage unit 508 constituted from hard disks, and a communication unit 509 constituted from a modem, and a LAN card or other such network interface card, are connected to the input/output interface 505. The communication unit 509 carries out communication processing via a network comprising the Internet.

A drive 510 is also connected to the input/output interface 505 as needed, a removable media 511, such as a magnetic disk, optical disk, magneto-optical disk, or semiconductor memory, is arbitrarily mounted, and computer programs read out therefrom are installed in the storage unit 508 as necessary.

When executing the above-described series of processes using software, the programs constituting this software are installed over a network, such as the Internet, or from a recording medium comprising the removable media 511.

Furthermore, this recording medium constitutes removable media 511 comprising a magnetic disk (including a floppy disk (registered trademark)), optical disk (including CD-ROM (Compact Disk-Read Only Memory), and DVD (Digital Versatile Disk)), magneto-optical disk (including MD (Mini-Disk) (registered trademark)), or semiconductor memory on which programs are recorded, which are separate from the body of the apparatus shown in Fig. 18. The recording medium can also be constituted by program-storing ROM 502, or hard disks included in the storage unit 508, which are delivered to a user in a state in which they are incorporated beforehand in the main body of the apparatus.

Of course, the steps for executing the series of processes described above in this specification comprise processing, which is carried out chronologically in line with a disclosed sequence, but these steps also comprise processing, which is not necessarily processed chronologically, but rather is carried out in parallel or individually.

## Claims

1. An image processing apparatus, comprising:
imaging means for capturing an image, and outputting data of the captured image;
conversion means for converting a tone of the image, based on data corresponding to an image of a preset region included in an image corresponding to the data outputted from the imaging means, which is an image of an object with a prescribed reflectance; and
display means for displaying an image corresponding to a signal of the image for which the tone has been converted by the conversion means.

2. The image processing apparatus according to Claim 1, wherein the imaging means converts an electric charge, which is generated in response to captured light, to an analog electric signal having a voltage value proportional to the logarithm of the number of charges for each pixel, and outputs the image data by converting the analog electric signal to digital data.

3. The image processing apparatus according to Claim 1, wherein the imaging means converts an electric current, which is generated in response to captured light, to an analog electric signal having a voltage value proportional to the logarithm of the size of the current for each pixel, and output the image data by converting the analog electric signal to digital data.

4. The image processing apparatus according to Claim 1, wherein a range of tones displayable on the display means is made smaller than a range of tones of an image captured by the imaging means.

5. The image processing apparatus according to Claim 1, further comprising receiving means for receiving the input of information related to the location of the region in the image.

6. The image processing apparatus according to Claim 1, wherein the conversion means comprises:
extraction means for extracting data corresponding to the preset region included in the image;
specification means for specifying a luminance range corresponding to a range of displayable tones in the image based on the data extracted by the extraction means; and
output means for converting the tones of the image to a range of tones displayable on the display means based on the luminance range specified by the specification means, and outputting a signal of data corresponding to the converted image.

7. The image processing apparatus according to Claim 6, wherein the extraction means calculates luminance values of pixels in the region based on data corresponding to the region, and specification means specifies the luminance range by allocating the luminance values of the pixels of the region calculated by the extraction means to a preset tone within the range of tones displayable on the display means, and specifying an upper limit value and a lower limit value of luminance corresponding to the range of displayable tones in the image.

8. The image processing apparatus according to Claim 7, wherein the conversion means further comprises storage means for storing information related to the location of the region in the image, and information related to a tone, which is within the range of tones displayable on the display means, and which corresponds to the luminance values of the pixels of the region.

9. The image processing apparatus according to Claim 7, wherein the conversion means determines a tone, which is within the range of tones displayable on the display means, and which corresponds to the luminance values of the pixels of the region, based on a user selection related to the display of the image of the region.

10. The image processing apparatus according to Claim 7, wherein the conversion means determines a tone, which is within the range of tones displayable on the display means, and which corresponds to the luminance values of the pixels of the region, based on the reflectance of the object of the image of the region.

11. The image processing apparatus according to Claim 10, further comprising distance measurement means for measuring the distance to the object in the image of the region, wherein the reflectance of the object is calculated based on the distance to the object in the image of the region measured by the distance measurement means, and the luminance values of the pixels of the region.

12. The image processing apparatus according to Claim 10, further comprising measurement means for emitting a laser beam on the object in the image of the region, and measuring the reflectance of the object based on the intensity of the light detected by a photodetection unit which receives the reflected light, and the distance to the object calculated based on the time it takes for the reflected light to be detected by the photodetection unit.

13. The image processing apparatus according to Claim 1, wherein the imaging means converts either an electrical charge or an electric current, which is generated in response to captured light, to an analog electric signal having a voltage value proportional to the logarithm of either the number of electrical charges or the size of the current for each pixel, and uses the conversion means to carry out tone conversion processing for the analog electrical signal, and
converts the analog electric signal which has been subjected to the processing by the conversion means, to digital data, and outputs the digital data.

14. An image processing method, comprising the steps of:
acquiring data of an image captured by imaging means;
converting a tone of the image based on data corresponding to an image of a preset region included in an image corresponding to the data acquired by the processing in the acquisition step, which is an image of an object with a prescribed reflectance; and
displaying an image corresponding to a signal of the image for which the tone has been converted by the processing in the conversion step.

15. A program, which causes an image processing apparatus to carry out image processing, and causes a computer to execute:
an acquisition control step of controlling the acquisition of data of an image captured by imaging means;
a conversion control step of controlling the conversion of a tone of the image based on data corresponding to an image of a preset region included in an image corresponding to the data acquired by the processing in the acquisition control step, which is an image of an object with a prescribed reflectance; and
a display control step of controlling the display of an image corresponding to a signal of the image for which the tone has been converted by the processing in the conversion control step.

16. A recording medium recorded with a program for causing an image processing apparatus to carry out image processing, and a program for causing a computer to execute:
an acquisition control step of controlling the acquisition of data of an image captured by imaging means;
a conversion control step of controlling the conversion of a tone of the image based on data corresponding to an image of a preset region included in an image corresponding to the data acquired by the processing in the acquisition control step, which is an image of an object with a prescribed reflectance; and
a display control step of controlling the display of an image corresponding to a signal of the image for which the tone has been converted by the processing in the conversion control step.
